# EUROPEAN PATENT APPLICATION

(11) **EP 4 550 503 A1**
(43) Date of publication of application: **07.05.2025**
(21) Application number: 24201668.1
(22) Date of filing: 20.09.2024
(51) Int. Cl.: H01M 10/052, H01M 50/152, H01M 50/325, H01M 50/54, H01M 50/636, H01M 50/186, H01M 50/528, H01M 50/548, H01M 50/559, H01M 50/567, H01M 10/04

(54) **LITHIUM BATTERY**

(30) Priority: 31.10.2023 CN 202322944694 U; 20.12.2023 WO PCT/CN2023/140212
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: ZHANG, Lei, Huizhou, Guangdong 516039 (CN); ZHAO, Fenfen, Huizhou, Guangdong 516039 (CN); LI, Qiaoying, Huizhou, Guangdong 516039 (CN)
(74) Representative: Murgitroyd & Company

(57) **Abstract**

The disclosure provides a lithium battery including a confluence sheet (100), a top cap sheet (200), an elastic gasket (300), and a positive terminal (400). The top cap sheet (200) is disposed on the confluence sheet (100), a first mounting groove (210) is provided in a center of a side of the top cap sheet (200) away from the confluence sheet (100), and a liquid injection hole (211) is provided in a center of the first mounting groove (210); the elastic gasket (300) is disposed in the first mounting groove (210); and the positive terminal (400) is disposed in the first mounting groove (210) and abuts against the elastic gasket (300).

## Description

### TECHNICAL FIELD

The disclosure relates to the field of lithium battery, and in particular, to a lithium battery.

### BACKGROUND

Lithium batteries (lithium ion batteries) are widely used in electric vehicles, backup power systems, and microgrid energy storage systems due to their advantages of high energy density, long lifetime, and the like. Generally, a lithium battery includes a coil core, electrolyte, a housing, a cap plate, and other components.

In related art, in order to inject liquid into the lithium battery during the manufacturing process for the lithium battery, a liquid injection hole is generally disposed in a top cap sheet of the lithium battery. Because the liquid injection hole in the top cap sheet of the lithium battery in related art is mostly located at the eccentric position of the top cap sheet, the operator or the equipment needs to position and align the liquid injection hole before injecting liquid into the lithium battery, which increases the difficulty of producing the lithium battery. Moreover, after the lithium battery is filled with liquid, the operator or the equipment needs to weld sealing nails at the liquid injection hole, which increases the production processes of the lithium battery and reduces its production efficiency.

### TECHNICAL PROBLEM

Embodiments of the disclosure provide a lithium battery to solve the problem of low production efficiency of the lithium battery.

### TECHNICAL SOLUTIONS

In a first aspect, embodiments of the disclosure provide a lithium battery, which includes:
a housing provided with an accommodating space;
a winding core disposed in the accommodating space;
a negative cap plate assembly disposed on a first side of the winding core;
a positive cap plate assembly disposed on a second side of the winding core, in which the first side is opposite to the second side, and the positive cap plate assembly includes:
a confluence sheet disposed on the winding core;
an insulating component disposed on the confluence sheet;
a top cap sheet disposed on the insulating component and connected to the confluence sheet, in which a first mounting groove is provided in a center of a side of the top cap sheet away from the confluence sheet, and a liquid injection hole is provided in a center of the first mounting groove;
an elastic gasket disposed in the first mounting groove and surrounding the liquid injection hole; and
a positive terminal disposed on the first mounting groove through a riveting component of the top cap sheet, in which the positive terminal abuts against the elastic gasket.

In a second aspect, embodiments of the disclosure further provide a battery module including the lithium battery mentioned-above.

### BENEFICIAL EFFECTS

Embodiments of the disclosure provide a lithium battery, which includes a housing, a winding core, a negative cap plate assembly, and a positive cap plate assembly. The housing is provided with an accommodating space. The winding core is disposed in the accommodating space. The negative cap plate assembly is disposed on a first side of the winding core. The positive cap plate assembly is disposed on a second side of the winding core. The first side is opposite to the second side. The positive cap plate assembly includes a confluence sheet, an insulating component, a top cap sheet, an elastic gasket, and a positive terminal. The confluence sheet is disposed on the winding core. The insulating component is disposed on the confluence sheet. The top cap sheet is disposed on the insulating component and connected to the confluence sheet. A first mounting groove is provided in the center of a side of the top cap sheet away from the confluence sheet, and a liquid injection hole is provided in the center of the first mounting groove. The elastic gasket is disposed in the first mounting groove and surrounding the liquid injection hole. The positive terminal is disposed on the first mounting groove through a riveting component of the top cap sheet. The positive terminal abuts against the elastic gasket. In the lithium battery according to the embodiments of the disclosure, the first mounting groove is disposed in the center of the top cap sheet, and the liquid injection hole is disposed in the center of the first mounting groove, so that the liquid injection hole is located at the center of the top cap sheet, and there is no need to position and align the liquid injection hole when injecting liquid into the lithium battery, which can reduce the difficulty of producing the lithium battery. Moreover, because the elastic gasket is disposed surrounding the liquid injection hole, and the positive terminal is disposed in the first mounting groove and abuts against the elastic gasket, the positive terminal and the elastic gasket can form a sealing structure to seal the liquid injection hole, and there is no need to weld sealing nails at the liquid injection hole, thereby reducing the production processes of the lithium battery and improving the production efficiency of the lithium battery.

### BRIEF DESCRIPTION OF THE DRAWINGS

FIG. 1 is an exploded view of a positive cap plate assembly according to some embodiments of the disclosure.
FIG. 2 is a cross-sectional view of the positive cap plate assembly when a positive terminal is not fixed according to some embodiments of the disclosure.
FIG. 3 is a cross-sectional view of the positive cap plate assembly when the positive terminal is fixed according to some embodiments of the disclosure.
FIG. 4 is an enlarged view of position A in FIG. 3.
FIG. 5 is an enlarged view of position B in FIG. 3.
FIG. 6 is a schematic structural diagram of an insulating component according to some embodiments of the disclosure.
FIG. 7 is a schematic structural diagram of a confluence sheet according to some embodiments of the disclosure.
FIG. 8 is a schematic structural diagram of a lithium battery according to some embodiments of the disclosure.

### Reference numerals:

100, confluence sheet; 110, confluence portion; 120, connection portion; 200, top cap sheet; 210, first mounting groove; 211, liquid injection hole; 212, annular protrusion; 2121, vertical portion; 2122, horizontal portion; 220, through hole; 230, groove; 240, limiting groove; 300, elastic gasket; 400, positive terminal; 410, protruding portion; 420, third mounting groove; 500, insulating component; 510, second mounting groove; 520, opening; 600, explosion-proof valve; 700, explosion-proof valve protective film; and 800, housing.

### DETAILED DESCRIPTION

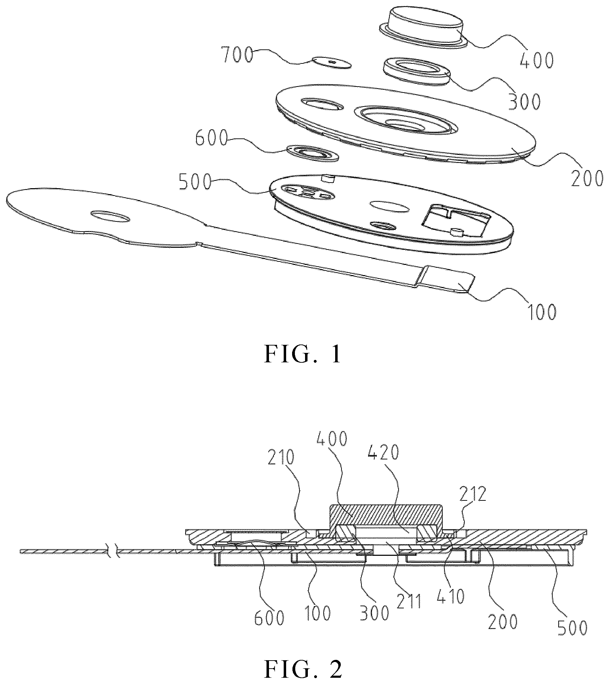

In related art, in order to inject liquid into the lithium battery during the manufacturing process for the lithium battery, a liquid injection hole is generally provided in a top cap sheet of the lithium battery. Because the liquid injection hole in the top cap sheet of the lithium battery in related art is mostly located at the eccentric position of the top cap sheet, the operator or the equipment needs to position and align the liquid injection hole before injecting liquid into the lithium battery, which increases the difficulty of producing the lithium battery. Moreover, after the lithium battery is filled with liquid, the operator or the equipment needs to weld sealing nails at the liquid injection hole, which increases the production processes of the lithium battery and reduces its production efficiency. Based on the above, embodiments of the disclosure provide a battery module including a lithium battery, as illustrated in FIG. 1, FIG. 2, FIG. 3, and FIG. 8, the lithium battery includes a housing 800, a winding core, a negative cap plate assembly, and a positive cap plate assembly.

Specifically, the housing 800 is provided with an accommodating space, and the winding core is disposed in the accommodating space. The negative cap plate assembly is disposed on a first side of the winding core, the positive cap plate assembly is disposed on a second side of the winding core, and the first side of the winding core is opposite to the second side.

Furthermore, the positive cap plate assembly includes a confluence sheet 100, an insulating component 500, a top cap sheet 200, an elastic gasket 300, and a positive terminal 400. The confluence sheet 100 is disposed on the winding core. The insulating component 500 is disposed on the confluence sheet 100. The top cap sheet 200 is disposed on the insulating component 500 and connected to the confluence sheet 100. A first mounting groove 210 is provided in the center of a side of the top cap sheet 200 away from the confluence sheet 100. A liquid injection hole 211 is provided in the center of the first mounting groove 210. The elastic gasket 300 is disposed in the first mounting groove 210 and surrounding the liquid injection hole 211. The positive terminal 400 is disposed on the first mounting groove 210 through a riveting component of the top cap sheet 200, and the positive terminal 400 abuts against the elastic gasket 300.

In the lithium battery provided by the embodiments of the disclosure, the first mounting groove 210 is disposed in the center of the top cap sheet 200, and the liquid injection hole 211 is disposed in the center of the first mounting groove 210, so that the liquid injection hole 211 is located at the center of the top cap sheet 200, and there is no need to position and align the liquid injection hole 211 when injecting liquid into the lithium battery, which can reduce the difficulty of producing the lithium battery. Moreover, because the elastic gasket 300 is disposed surrounding the liquid injection hole 211, and the positive terminal 400 is disposed in the first mounting groove 210 and abuts against the elastic gasket 300, the positive terminal 400 and the elastic gasket 300 can form a sealing structure to seal the liquid injection hole 211, and there is no need to weld sealing nails at the liquid injection hole 211, thereby reducing the production processes of the lithium battery and improving the production efficiency of the lithium battery. In addition, when the lithium battery does not use the sealing nails, the number of components in the positive cap plate assembly can be reduced, which reduces the production cost of the positive cap plate assembly.

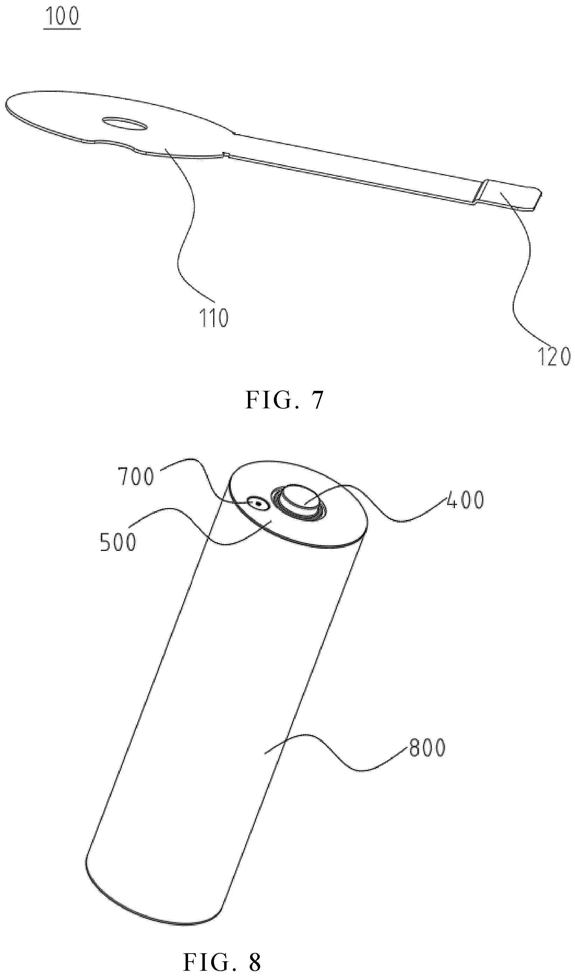

Referring to FIG. 7, in some embodiments, the confluence sheet 100 includes a confluence portion 110 and a connection portion 120 connected to one side of the confluence sheet 110, and the connection portion 120 is connected to the top cap sheet 200 passing through the insulating component 500.

In some embodiments, the insulating component 500 is a silica gel plate.

In some embodiments, the elastic gasket 300 is a rubber ring or a silica gel ring.

In some embodiments, a bottom of the positive terminal 400 is provided with a third mounting groove 420 communicated with the first mounting groove 210. One part of the elastic gasket 300 is disposed in the first mounting groove 210, and another part of the elastic gasket 300 is disposed in the third mounting groove 420.

In some embodiments, the first mounting groove 210 and the third mounting groove 420 are both circular.

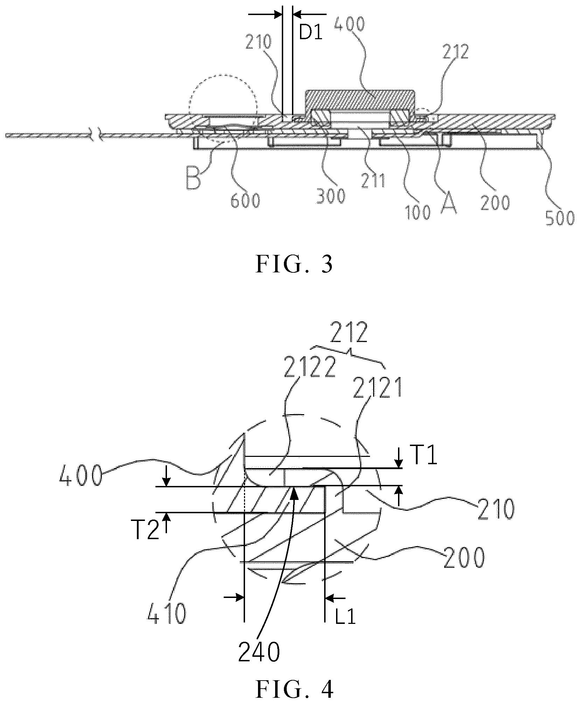

Referring to FIG. 2, FIG. 3, and FIG. 4, in some embodiments, the riveting component includes an annular protrusion 212 extending from a bottom of the first mounting groove 210 to a direction away from the confluence sheet 100. The annular protrusion 212 is bent towards the center of the liquid injection hole 211, and a limiting groove 240 is formed between the annular protrusion 212 and the first mounting groove 210, as illustrated in FIG. 4. The positive terminal 400 includes a protruding portion 410 extending along a direction from a peripheral wall of the positive terminal 400 to the limiting groove 240, and the protruding portion 410 is inserted into the limiting groove 240. By setting the annular protrusion 212 being bent towards the center of the liquid injection hole 211, the limiting groove 240 can be formed between the annular protrusion 212 and the first mounting groove 210. Moreover, because the protruding portion 410 is disposed extending along the direction from the peripheral wall of the positive terminal 400 to the limiting groove 240, the protruding portion 410 can be inserted into the limiting groove 240, ensuring that the positive terminal 400 can be riveted and fixed on the first mounting groove 210.

In some embodiments, the entirety of the annular protrusion 212 extends from the bottom of the first mounting groove 210 to the direction away from the confluence sheet 100, and the entirety of the protruding portion 410 extends along the direction from the peripheral wall of the positive terminal 400 to the limiting groove 240.

In some embodiments, the annular protrusion 212 includes multiple first protrusion portions arranged at intervals, and a first notch is formed between every adjacent two first protrusion portions. Correspondingly, the protruding portion 410 includes multiple second protrusion portions arranged at intervals, and a second notch is formed between every adjacent two second protrusion portions. The limiting groove 240 is formed between the first protrusion portions and the first mounting groove 210, and the first protrusion portions are disposed in the limiting groove 240.

In some embodiments, the annular protrusion 212 includes multiple first protrusion portions arranged at intervals, and a first notch is formed between every adjacent two first protrusion portions. The entirety of the protruding portion 410 extends along the direction from the peripheral wall of the positive terminal 400 to the limiting groove 240. The limiting groove 240 is formed between the first protrusion portions and the first mounting groove 210, and the protruding portion 410 is disposed in the limiting groove 240.

In some embodiments, the entirety of the annular protrusion 212 extends from the bottom of the first mounting groove 210 to the direction away from the confluence sheet 100. The protruding portion 410 includes multiple second protrusion portions arranged at intervals, and the second notch is formed between every adjacent two second protrusion portions. The limiting groove 240 is formed between the annular protrusion 212 and the first mounting groove 210, and the second protrusion portions is disposed in the limiting groove 240.

Referring to FIG. 4, in some embodiments, the annular protrusion 212 includes a vertical portion 2121 and a horizontal portion 2122 connected to the vertical portion 2121. The vertical portion 2121 is connected to the first mounting groove 210. A bottom surface of the horizontal portion 2122 is in close contact with a top surface of the protruding portion 410, so that the connection between the annular protrusion 212 and the protruding portion 410 can be sealed, thereby achieving the sealing to the liquid injection hole 211.

In some embodiments, the bottom surface of the horizontal portion 2122 and the top surface of the protruding portion 410 are both flat surfaces, so that the bottom surface of the horizontal portion 2122 can be in better contact with the top surface of the protruding portion 410.

When the positive cap plate assembly is assembled, the insulating component 500 is installed on the confluence sheet 100, the connection portion 120 of the confluence sheet 100 passes through an opening 520 of the insulating component 500, and the connection portion 120 of the confluence sheet 100 is installed on a top surface of the insulating component 500. Then, an explosion-proof valve 600 is installed in a second mounting groove 510, the top cap sheet 200 is fixed on the confluence sheet 100, and the top cap sheet 200 is connected to the confluence sheet 100. Then, the elastic gasket 300 and the positive terminal 400 are placed in the first mounting groove 210 in sequence, so as to ensure that the protruding portion 410 of the positive terminal 400 is disposed in the area where the annular protrusion 212 is located; and at the same time, a force is applied to the positive terminal 400. The elastic gasket 300 is pressed by the action of the force applying on the positive terminal 400, ensuring that a horizontal plane where the protruding portion 410 is located is lower than a horizontal plane where the annular protrusion 212 is located. Finally, the annular protrusion 212 is bent towards the center of the liquid injection hole 211 to limit the protruding portion 410, so as to complete the assembly of the lithium battery.

In some embodiments, as illustrated in FIG. 4, the annular protrusion 212 has a thickness T1 of 0.5 mm to 1 mm. By selecting the annular protrusion 212 having the thickness T1 of 0.5 mm to 1 mm, ensuring the strength of the annular protrusion 212, and avoiding the deformation of the annular protrusion 212 caused by an excessive low thickness of the annular protrusion 212 when the annular protrusion 212 undergoes greater extrusion force. In some embodiments, the annular protrusion 212 has the thickness T1 of 0.5 mm, 0.8 mm, or 1 mm.

In some embodiments, as illustrated in FIG. 4, the protruding portion 410 has a thickness T2 greater than or equal to 0.5 mm, and has a length L1 greater than or equal to 5 mm. By selecting the protruding portion 410 having the thickness T2 greater than or equal to 0.5 mm, ensuring the strength of the protruding portion 410, avoiding the deformation of the protruding portion 410 caused by an excessive low thickness of the protruding portion 410 when the protruding portion 410 undergoes greater extrusion force. Moreover, by selecting the protruding portion 410 having the length L1 greater than or equal to 5 mm, avoiding reducing the sealing performance of the sealing structure of the liquid injection hole 211 caused by a smaller bonding area between the protruding portion 410 and the horizontal portion 2122 due to an excessive short length of the protruding portion 410. In some embodiments, the protruding portion 410 has the thickness T2 of 0.5 mm, 0.75 mm, or 0.8 mm, and has the length L1 of 5 mm, 6 mm, or 8 mm.

In some embodiments, as illustrated in FIG. 3, a distance D1 between a sidewall of the first mounting groove 210 and the annular protrusion 212 ranges from 5 mm to 20 mm. In some embodiments, the distance D1 between the sidewall of the first mounting groove 210 and the annular protrusion 212 is 6 mm, 10 mm, or 18 mm.

In some embodiments, the positive terminal 400 has a height of 2 mm to 3 mm. In some embodiments, the positive terminal 400 has the height of 2 mm, 2.5 mm, or 2.8 mm.

In some embodiments, a distance between a top surface of the positive terminal 400 and a top surface of the third mounting groove 420 is greater than or equal to 1 mm. In some embodiments, the distance between the top surface of the positive terminal 400 and the top surface of the third mounting groove 420 is 2 mm, 3 mm, or 4 mm.

In some embodiments, the third mounting groove 420 has a depth of 1 mm to 3 mm.

In some embodiments, the elastic gasket 300 has a compression range of 15% to 45%, ensuing that the elastic gasket 300 can produce sufficient elastic force to press the positive terminal 400, so that the bottom surface of the horizontal portion 2122 is in close contact with the top surface of the protruding portion 410.

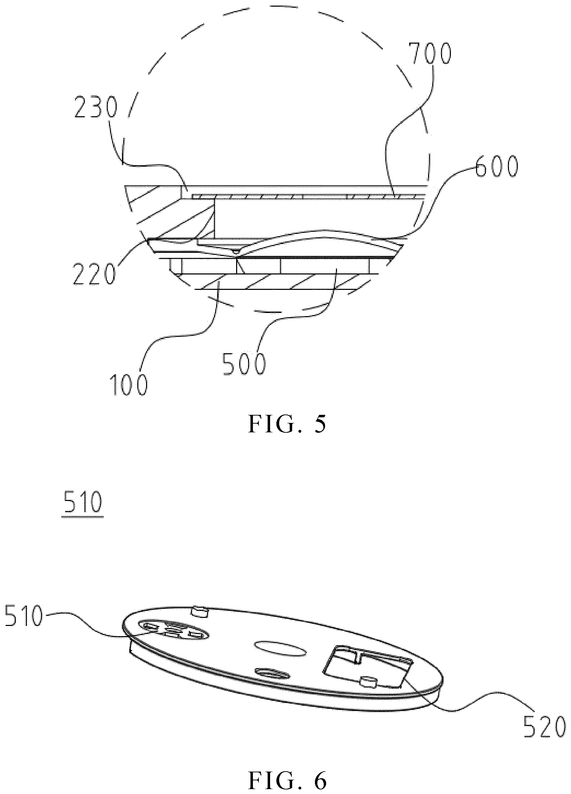

Referring to FIG. 3, FIG. 5, and FIG. 6, in some embodiments, the lithium battery further includes the explosion-proof valve 600, in which the insulating component 500 is provided with a second mounting groove 510 at a side of the insulating component 500 close to the top cap sheet 200, and the explosion-proof valve 600 is disposed in the second mounting groove 510. By setting the explosion-proof valve 600, when the internal pressure of the lithium battery is too high, the explosion-proof valve 600 is open and releases the gas inside the lithium battery to reduce the pressure inside the lithium battery, thereby reducing the risk of explosion or leakage of the lithium battery.

In some embodiments, the insulating component 500 is provided with the opening 520, and the connection portion 120 of the confluence sheet 100 is connected to the bottom of the top cap sheet 200 passing through the opening 520.

Referring to FIG. 3, FIG. 5, and FIG. 6, in some embodiments, the lithium battery further includes an explosion-proof valve protection film 700, in which the top cap sheet 200 is further provided with a through hole 220 disposed corresponding to the second mounting groove 510, and the explosion-proof valve protection film 700 is disposed in the through hole 220 away from the explosion-proof valve 600. By setting the explosion-proof valve protective film 700, it is possible to prevent dust, moisture, or other impurities from entering the explosion-proof valve 600 through the through hole 220, thereby ensuring the smoothness of the explosion-proof valve 600, and avoiding the explosion-proof valve 600 from being affected by external environment and not working normally.

In some embodiments, the top cap sheet 200 is provided with a groove 230 at a side of the top cap sheet 200 away from the explosion-proof valve 600. The groove 230 is disposed surrounding the through hole 220 and communicated with the through hole 220. The explosion-proof valve protective film 700 is disposed in the groove 230.

### Sealing principle for the liquid injection hole:

Because the positive terminal 400 is disposed in the first mounting groove 210 by the method of rotary riveting connection, the positive terminal 400 is in a rotatable state at this case. During the assembly processes of the elastic gasket 300 and the positive terminal 400, the elastic sealing ring 300 is compressed by the positive terminal 400, allowing the bottom surface of the elastic gasket 300 to be in close contact with the bottom surface of the first mounting groove 210, thereby forming a first sealing area to achieve a primary sealing to the liquid injection hole 211. Moreover, when the elastic gasket 300 is compressed by the positive terminal 400, the elastic gasket 300 has elastic potential energy. Because of the elastic potential energy of the elastic gasket 300, the positive terminal 400 has a tendency to move away from the elastic gasket 300, so that the top surface of the protruding portion 410 can be in close contact with the bottom surface of the horizontal portion 2122 of the annular protrusion 212, forming a second sealing area to carry out a secondary sealing to the liquid injection hole 211.

## Claims

1. A lithium battery, **characterized in that** the lithium battery comprises:
a housing (800) provided with an accommodating space;
a winding core disposed in the accommodating space;
a negative cap plate assembly disposed on a first side of the winding core;
a positive cap plate assembly disposed on a second side of the winding core, wherein the first side is opposite to the second side; and wherein the positive cap plate assembly comprises:
a confluence sheet (100) disposed on the winding core;
an insulating component (500) disposed on the confluence sheet (100);
a top cap sheet (200) disposed on the insulating component (500) and connected to the confluence sheet (100), wherein a first mounting groove (210) is provided in a center of a side of the top cap sheet (200) away from the confluence sheet (100), and a liquid injection hole (211) is provided in a center of the first mounting groove (210);
an elastic gasket (300) disposed in the first mounting groove (210) and surrounding the liquid injection hole (211); and
a positive terminal (400) disposed on the first mounting groove (210) through a riveting component of the top cap sheet (200), wherein the positive terminal (400) abuts against the elastic gasket (300).

2. The lithium battery according to claim 1, **characterized in that** the riveting component comprises an annular protrusion (212) extending from a bottom of the first mounting groove (210) to a direction away from the confluence sheet (100), the annular protrusion (212) is bent towards a center of the liquid injection hole (211), and a limiting groove (240) is formed between the annular protrusion (212) and the first mounting groove (210); and the positive terminal (400) comprises a protruding portion (410) extending along a direction from a peripheral wall of the positive terminal (400) to the limiting groove (240), and the protruding portion (410) is inserted into the limiting groove (240).

3. The lithium battery according to claim 2, **characterized in that** the annular protrusion (212) comprises:
a vertical portion (2121) connected to the first mounting groove (210); and
a horizontal portion (2122) connected to the vertical portion (2121), wherein a bottom surface of the horizontal portion (2122) is in close contact with a top surface of the protruding portion (410).

4. The lithium battery according to claim 3, **characterized in that** the bottom surface of the horizontal portion (2122) and the top surface of the protruding portion (410) are both flat surfaces.

5. The lithium battery according to claim 2, **characterized in that** the annular protrusion (212) has a thickness of 0.5 mm to 1 mm; or
the protruding portion (410) has a thickness greater than or equal to 0.5 mm and has a length greater than or equal to 5 mm.

6. The lithium battery according to claim 2, **characterized in that** a distance between a sidewall of the first mounting groove (210) and the annular protrusion (212) ranges from 5 mm to 20 mm.

7. The lithium battery according to claim 1, **characterized in that** the positive terminal (400) has a height of 2 mm to 3 mm.

8. The lithium battery according to claim 1, **characterized in that** the elastic gasket (300) has a compression range of 15% to 45%.

9. The lithium battery according to any one of claims 1 to 8, **characterized in that** the lithium battery further comprises an explosion-proof valve (600), the insulating component (500) is provided with a second mounting groove (510) at a side of the insulating component (500) close to the top cap sheet (200), and the explosion-proof valve (600) is disposed in the second mounting groove (510).

10. The lithium battery according to claim 9, **characterized in that** the lithium battery further comprises an explosion-proof valve protective film (700), the top cap sheet (200) is provided with a through hole (220) disposed corresponding to the second mounting groove (510), and the explosion-proof valve protective film (700) is disposed in the through hole (220) away from the explosion-proof valve (600).

11. The lithium battery according to claim 10, **characterized in that** the top cap sheet (200) is provided with a groove (230) at a side of the top cap sheet (200) away from the explosion-proof valve (600), the groove (230) is disposed surrounding and communicated with the through hole (220), and the explosion-proof valve protective film (700) is disposed in the groove (230).

12. The lithium battery according to claim 1, **characterized in that** the confluence sheet (100) comprises a confluence portion (110) and a connection portion (120) disposed at a side of the confluence portion (110), wherein the connection portion (120) is connected to the top cap sheet (200) passing through the insulating component (500).

13. The lithium battery according to claim 12, **characterized in that** the insulating component (500) is provided with an opening (520), and the connection portion (120) is connected to a bottom of the top cap sheet (200) passing through the opening (520).

14. The lithium battery according to claim 1, **characterized in that** a bottom of the positive terminal (400) is provided with a third mounting groove (420) communicated with the first mounting groove (210), a part of the elastic gasket (300) is disposed in the first mounting groove (210), and another part of the elastic gasket (300) is disposed in the third mounting groove (420).

15. A battery module comprising the lithium battery as claimed in any one of claims 1 to 14.
